**Europäisches Patentamt**

**European Patent Office**

**Office européen des brevets**

(19)

(11) Publication number : **0 403 052 B1**

(12) **EUROPEAN PATENT SPECIFICATION**

(45) Date of publication of patent specification :
**21.06.95 Bulletin 95/25**

(51) Int. Cl.⁶ : **H01M 4/32,** H01M 4/66,
H01M 4/62, H01M 4/30,
H01M 10/30, H01M 10/28

(21) Application number : **90303732.3**

(22) Date of filing : **06.04.90**

(54) **Nickel electrode and alkaline battery using the same.**

(30) Priority : **15.06.89 JP 152786/89**
**17.08.89 JP 212767/89**

(43) Date of publication of application :
**19.12.90 Bulletin 90/51**

(45) Publication of the grant of the patent :
**21.06.95 Bulletin 95/25**

(84) Designated Contracting States :
**DE FR GB**

(56) References cited :
**EP-A- 0 256 929**
**FR-A- 2 512 075**
**US-A- 4 364 422**
**US-A- 4 546 058**

(73) Proprietor : **YUASA CORPORATION**
**6-6, Johsai-cho**
**Takatsuki-City Osaka Prefecture (JP)**

(72) Inventor : **Ohnishi, Masuhiro**
**c/o Yuasa Battery Company Limited,**
**6-6 Johsai-cho**
**Takatsuki City, Osaka Prefecture (JP)**
Inventor : **Watada, Masaharu**
**c/o Yuasa Battery Company Limited,**
**6-6 Johsai-cho**
**Takatsuki City, Osaka Prefecture (JP)**
Inventor : **Ohitani, Masahiko**
**c/o Yuasa Battery Company Limited,**
**6-6 Johsai-cho**
**Takatsuki City, Osaka Prefecture (JP)**

(74) Representative : **Bannerman, David Gardner et al**
**Withers & Rogers**
**4 Dyer's Buildings**
**Holborn**
**London, EC1N 2JT (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

BACKGROUND OF THE INVENTION

Field of the Invention

The present invention concerns a nickel electrode for use in an alkaline battery and an alkaline battery using such a nickel electrode.

Description of the Prior Art

Production process for a nickel electrode for use in a nickel-cadmium battery known at present includes the following two methods, i.e., a so-called sintering method of inpregnating a finely porous substrate (80% porosity) prepared by sintering nickel powder to a perforated steel sheet with a nickel salt under a reduced pressure and then converting the nickel salt into nickel hydroxide in an aqueous alkaline solution, and a so-called pasting method of loading nickel hydroxide powder in a slurry form to a highly porous current collector (90~98% porosity) made of sintered alkaline-proof metal fibers.

The former method was developed during the World War II, which has been improved for every particular portion upto now. However, no principal changes have been made and it requires to repeat, over several cycles, a series of complicate loading steps, that is, solution impregnation alkaline soaking, water rinsing and drying. Accordingly, it has a drawback of being expensive. Further, since the energy density is linited to about 400 mAh/cc due to the structural factor, it has become difficult to satisfy the market needs along with the reduction for the weight and size of portable electronic equipment which has been under rapid progress at present (requiring about 600 mAh/cc). The pasting method has been developed in recent years for simplifying the production steps from wide point of views such as for current collectors, active materials and additives. In addition, it can attain the high energy density substantially capable of coping with the present market needs. However, since sintered highly porous alkaline-proof metal fibers used for the current collector are expensive, it still involves a drawback that the product cost is increased, for which a substantial improvement is demanded.

For overcoming various problems in such production steps and cost, it has been demanded for an ultimate electrode like that existent lead electrodes using only the core metal for the substrate and many researchers have made various studies. However, the present technique still involves various problems and has not yet been put to practical use.

The present invention will be described together with the results of our previous studies which result in the invention and referring to the drawings.

DESCRIPTION OF THE ACCOMPANYING DRAWINGS

Fig. 1 shows a perspective view of a nickel mesh current collector;
Figs. 2 (a), (b) show cross section of a coated mesh electrode before and after pressing;
Fig. 3 shows a relationship between the thickness of the active material layer and the utilization ratio;
Fig. 4 shows a relationship between the thickness of the active material layer and the thickness of the actuated active material layer;
Figs. 5 (a)-(c) show a model for forming a conductive network in adding the conductive material and the divalent cobalt compound in combination;
Figs. 6 and 7 show the synergistic effect obtained by the combined addition of the conductive material and cobalt monoxide;
Fig. 8 shows cell discharge characteristics in a case of fabricating the active material to which the conductive material and cobalt monoxide are added in combination, into a sheet-like form;
Fig. 9 shows a relationship between the addition amount of nickel powder and utilization ratio for the active material;
Fig. 10 shows a relationship between the effective distance of a conductive network and the addition amount of the conductive material;
Fig. 11 shows a cross section of the nickel electrode using a mesh current collector with the boundary portion comprising the cobalt oxyhydroxide layer and the active material layer having the conductive network of oxyhydroxide assisted with the fiberous conductive material.

DESCRIPTION OF THE INVENTION

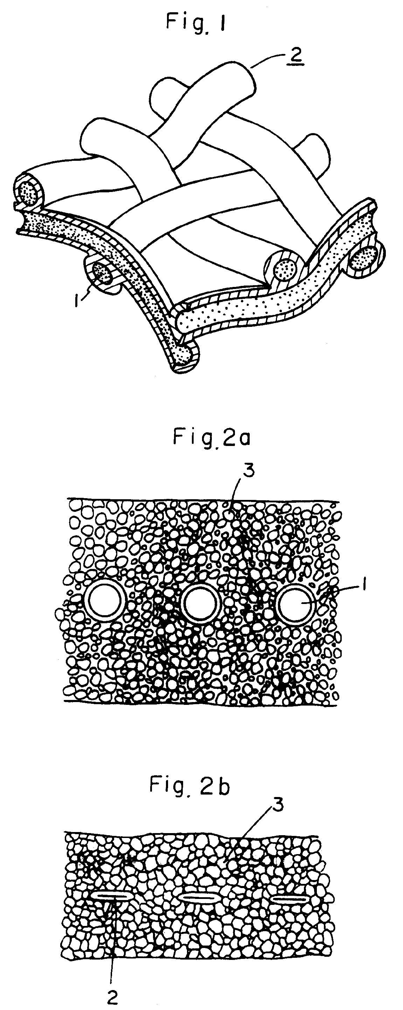

Upon starting the study on such an electrode, we have first studied the current collector. Initially, a study has been made on a method of using a nickel foil as a core metal current collector and coating active material, thereby obtaining an inexpensive nickel electrode (Japanese Patent Laid Open No. Sho 61-263047). In this method, however, since adhesion between the particulate active material and the nickel foil current collector is insufficient, the particulate active material tends to be detached. And, since the foil has not sufficient mechanical strength, it tends to crease at the surface. With such problems, the method has not yet reached the practical use. Then, for improving these drawbacks, we have noted on a method of using mesh-like nickel wires as a current collector. However, it has been found that fabrication of nickel wires into a mesh-like form requires an increased cost. Then, we have noted on an inexpensive mesh-like alkaline-proof metal of wire which is hollow as indicated in Fig. 1 as material for current collector. This material is obtained by applying nickel coating to a mesh-like cloth and, subsequently, heating to remove the inner cloth. As a result, it has been found that this material has not only mechanical strength and cost reduction but also various merits, such as nickel having no concerns with cell reactions is not contained at the inside of the current collector and inner pores can be removed by pressing the electrode to obtain high energy density(refer to Figs. 2(a) and (b)). Therefore we have considered that this material is effective as current collector material. Such hollow fiber material has already been used in FR-A-2512075, but no pressing step was applied. In a case of using this material (hereinafter simply referred to as a mesh current collector) as a current collector, it has been further found that the utilization ratio of the active material (the active service capacity/theoretical capacity), hereinafter simply referred to as the utilization ratio, is extremely low if the mesh current collector is merely coated with the active material 3.

As described by Barnard et al. in J.Appl.Electrochem. 10, 127 (1980), it has been known that the utilization ratio of nickel hydroxide is in a reverse proportion with a distance between a current collector and particles of active material. Considering this theory, it has been assumed that the utilization ratio is lowered in the case described above because of the distance between the mesh current collector and the outermost active material particles. Accordingly, in order to attain a high utilization ratio in using a mesh current collector, it is necessary to improve the conductivity of the electrode. The electrode is generally comprised of three portions, that is, a current collector portion, a boundary portion between the current collector and the first layer of the active material layer adjacent therewith (hereinafter simply referred to as a boundary portion), and an active material layer portion. Then, the study was made for each of the portions of the electrode individually.

Among them, the conductivity of the current collector portion is sufficient with the present structure and there is no problem to be solved. Accordingly, a study as to the effect of the conductivity of the boundary portion on the utilization ratio was carried out at first.

In this boundary portion, electrons are transferred between the current collector made of metal and the active material of metal hydroxide. Thus the boundary portion is different from the boundary between each of particles of the metal hydroxide in the active material layer. And it is considered to play an important role for electrode reaction. Accordingly, this gives a considerable effect on the utilization ratio. The current collector and the active material are usually in contact with each other only physically at the boundary portion. Thus it is deduced to lead to the reduction of the conductivity. Further, since corrosion occurs at the surface of the current collector in the course of the electrode reaction even when the collector is made of alkaline-proof metal, corrosion products formed at the boundary portion bring about the reduction of the conductivity.

In order to provide the boundary portion with high conductivity, it is necessary to firmly bond the current collector and the active material with a layer possessing high conductivity and electrochemical irreversibility. At present,cobalt oxyhydroxide can be mentioned as the material possessing such property in an alkaline solution at high concentration. As a method of forming a layer of cobalt oxyhydroxide at the boundary portion, it is considered to use a mesh current collector which is coated with a divalent cobalt compound which is electrolytically deposited and then electrochemically coverted into cobalt oxyhydroxide.

The oxyhydroxide layer formed at the surface of the current collector by this method, can also obtain a further effect of improving the corrosion resistance of the current collector, thereby extending the working life of the electrode.

Next, the effect of the conductivity of the active material layer on the utilization ratio will be discussed as follows. As described above, since the mesh current collector has no three dimensional structure being different from sintered highly porous fiber current collector, a distance arises from the thickness of the pasted active material layer between the surface of the electrode and the current collector. Accordingly, a potential difference arises from the conductivity of the active material layer between the the current collector and the surface of the electrode, which leads to competitive reactions depending on the difference of the distance from the current collector upon charging. The competitive reactions result in $\gamma$-NiOOH at the boundary portion. Since the formation of $\gamma$-NiOOH causes the active material particles to expand and shrink along with charge and discharge, adhesion formed in the boundary portion described above is broken. In order to inhibit the formation of $\gamma$-NiOOH and attain a high utilization ratio, it is necessary to improve the conductivity for the entire active material layer, thereby reducing the potential difference due to the thickness of the active material layer.

It has been generally known that the improvement of the conductivity of the active material layer can be attained by adding powder of conductive material, such as carbon and nickel, or powder of a divalent cobalt compound, such as cobalt monoxide and cobalt hydroxide (refer to Japanese Patent Laid Open Sho 62-256366), to the active material. The aim of the former method is improvement of the conductivity of the active material layer by addition of the highly conductive material but it involves a problem in view of the energy density since it is necessary to add an extremely great amount of the conductive material. Further, since it is necessary to press the electrode on both sides at a high pressure, there is a problem in view of the production. The latter method also aims at improvement of the conductivity of the active material layer by the formation of conductive network of the cobalt oxyhydroxide in the said layer. The divalent cobalt compound added to the active material is once converted into blue complex ions in an alkaline solution at high concentration and re-deposited on the surface of the active material, which are converted into cobalt oxyhydroxide possessing conductivity by the first charge. This method is effective in using the sintered highly porous fiber current collector in which the distance between the active material and the current collector is relatively short. However, it is not sufficient for the mesh current collector in which this distance is greater than the effective distance of the conductive network. When such a conventional method has been applied actually to the mesh current collector, only an extremely low utilization ratio of the active material can be obtained. Accordingly, for improving the conductivity of the active material layer in using the mesh current collector, merely the addition method as in the prior art is still insufficient and it is necessary for a further consideration on the additives.

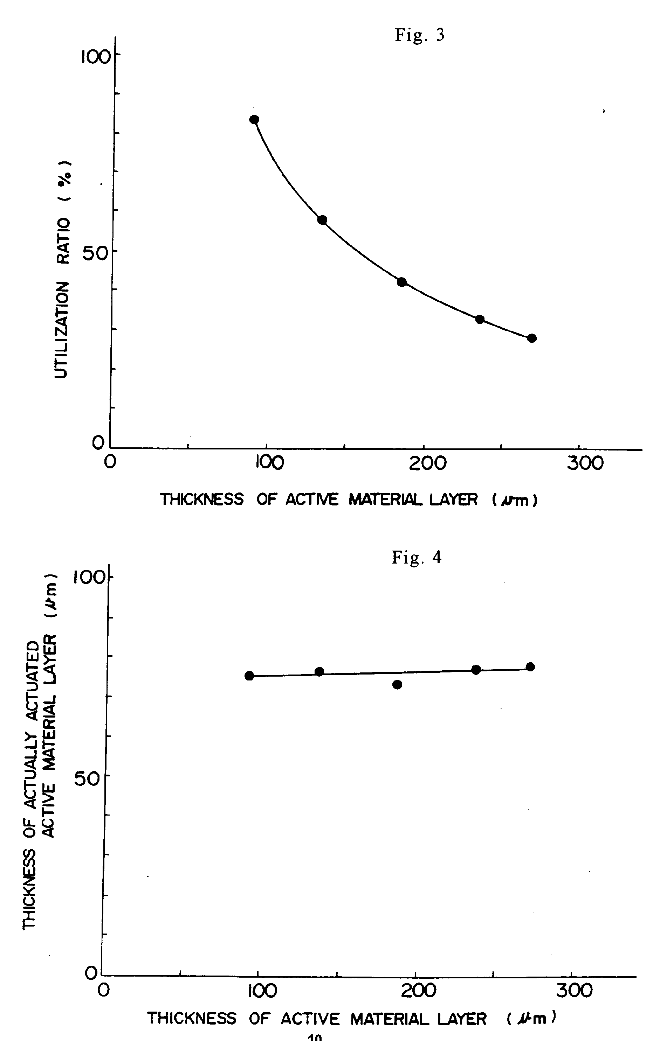

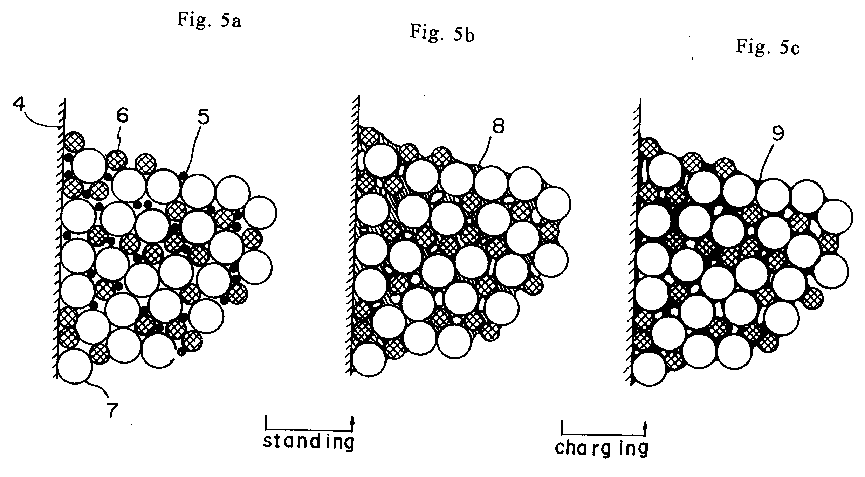

In view of the above, a closer study was made at first on the method of adding a divalent cobalt compound which is one of the most excellent methods applied at present to nickel electrodes. In the case of using this method for the mesh current collector, it is necessary to consider the effective distance of the conductive network. Since it has not been clear for the exact value of the effective distance, the value has been estimated approximately by the following method. An electrode is prepared by pasting an active material comprising 10 wt% of cobaltous monoxide and 90 wt% of nickel hydroxide to a nickel foil current collector. The thickness of the electrode is controlled by varying the amount of the active material. A charge-discharge test is conducted by using the electrode to measure the utilization ratio . The results are shown in Fig. 3. Considering the steric condition of this electrode, the discharge of the active material occurs from the vicinity of the current collector. Thus the thickness of actually actuated active material layer can be calculated by a mathematical product of the thickness of the active material layer and its utilization ratio. Fig. 4 is obtained by applying the mathematical process to Fig. 3. It can be seen from Fig.5 that the thickness of the actuated active material layer has a substantially constant value even if that of the pasted active material layer is varied. Therefore it is estimated that the effective distance of the conductive network formed in this case is about 70 to 80 $\mu$m.

Accordingly, it is necessary to increase the effective distance of the conductive network in order to attain a high utilization ratio in using the mesh current collector. As one of such attempts, although it has been studied to form a conductive network enhanced by increasing the addition amount of the divalent cobalt compound, it has not been possible to attain an improvement in the utilization ratio. Then a study was made on an additional method combining the divalent cobalt compound with the conductive material. This attempt has an aim of forming a conductive network in which cobalt oxyhydroxide 9 connects each of the conductive material 6. Namely, the divalent cobalt compound 5 added to the active material 7 with the conductive material 6 is dissolved and re-deposited on the surface of the conductive material, the active material and the current collector 4, the divalent cobalt compound being converted into cobalt oxyhydroxide 9 by the first charge. Fig. 5(a)~(c) show a model of forming the conductive network. In this case, the conductive material 6 has to be alkaline-proof and causing no or less change due to the electrode reactions. That is, alkaline-proof metal, alloy or metal oxide, conductive material coated with alkaline-proof metal or carbon are appropriate. This addition method has proved to improve the utilization ratio. Further, it has become apparent that the conductive material has an effect of improving the conductivity of the active material in a smaller addition amount as compared with the case where the conductive material is added alone.

Since this conductive network is formed by connecting each particle of the conductive material by cobalt oxyhydroxide, a network connecting "line" is more effective than a network connecting "point" as powder. Thus a fibrous shape is more effective for the conductive material. However, since too long fibers may cause an heterogenous state in the active material layer, its length is desirably within such a range as not causing heterogenity.

By improving the conductivity at the boundary portion and the active material layer with the aforementioned method, it is possible to obtain high utilization ratio also in using the mesh current collector. It is, accordingly, an object of the present invention to provide an inexpensive nickel electrode of high performance, great capacity and high productivity, as well as an alkaline battery using such a nickel electrode.

SUMMARY OF THE INVENTION

The present invention provides a method of constructing an alkaline battery, comprising:
(i) forming an electrode by applying an active material as a paste to a current collector formed of a network-like metal mesh of hollow nickel wire, drying and pressing the resulting structure to close the spaces inside the hollow wire, and
(ii) assembling the said electrode into a battery together with electrolyte and allowing it to stand, dissolving a divalent cobalt compound in the electrolyte so that it forms a deposit on the electrode, and then applying a first charge to the battery to convert the cobalt hydroxide to cobalt oxyhydroxide.

Preferably the active material comprises nickel hydroxide powder added divalent cobalt compound powder in combination with conductive material powder.

Preferably the divalent cobalt compound is at least one or more of CoO, $\alpha$ - $Co(OH)_2$ and $\beta$ - $Co(OH)_2$.

Preferably the conductive additives are selected from a metal stable in an oxidation/reduction reaction, a conductive material coated with a metal stable in an oxidation/reduction reaction and carbon.

Preferably the conductive additive is short fibrous.

The following examples do not limit the scope of the invention :

Example 1

An aqueous solution comprising carboxymethyl cellulose as a viscosity inprover was respectively added to a mixture of 80% by weight of the nickel hydroxide powder and 20% by weight of the cobalt monoxide powder (hereinafter simply referred to as A); a mixture of 80% by weight of the nickel hydroxide powder and 20% by weight of the carbon powder (hereinafter simply referred to as B); and a mixture of 80% by weight of the nickel hydroxide powder, 10% by weight of the cobalt monoxide powder and 10% by weight of the carbon powder (hereinafter simply referred to as C), to form three kinds of slurry active materials.

These slurries were pasted to a nickel mesh current collector $\alpha$ of 80 $\mu$m wire diameter applied with plating of cobalt of 3 $\mu$m thickness and a nickel mesh current collector $\beta$ not applied with cobalt plating respectively, which were dried and pressed into nickel electrodes each of 600 $\mu$m (0.6 mm) thickness.

These nickel electrodes were combined with a pasted cadmium electrode as a counter electrode, to which KOH at d = 1.26 was injected to obtain solution type cells. After leaving them for 24 hours, tests were conducted by charging at 0.1 CA X 15 hr - discharging at 0.2 CA (final voltage: 1.00 V) at a temperature of 20°C repeatedly for 10 cycles.

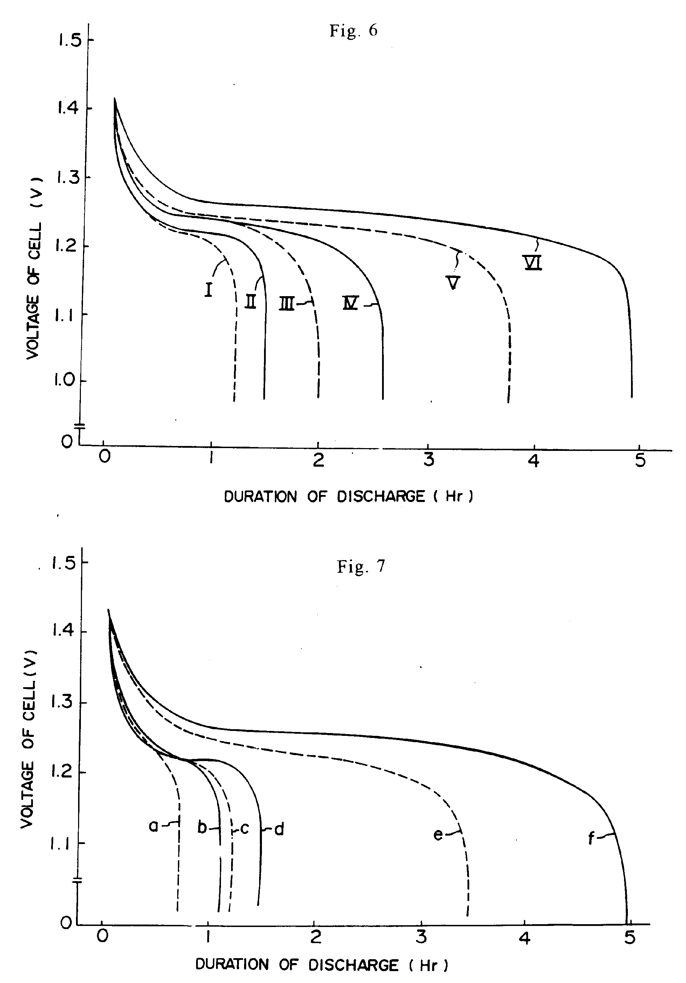

Fig. 6 shows cell discharge characteristics in respective cases. In the figure, conditions for the nickel electrodes I $\sim$ VI are shown in the following Table 1.

Table 1

|  | I | II | III | IV | V | VI |
|---|---|---|---|---|---|---|
| Kind of current collector | $\beta$ | $\alpha$ | $\beta$ | $\alpha$ | $\beta$ | $\alpha$ |
| Kind of active material | A | A | B | B | C | C |

Example 2

An aqueous solution comprising carboxymethyl cellulose as a viscosity improver was respectively added to a mixture of 60% by weight of the nickel hydroxide powder and 40% by weight of the cobalt monoxide powder (hereinafter simply referred to as D); a mixture of 60% by weight of the nickel hydroxide powder and 40% by weight of the nickel powder (hereinafter simply referred to as E); and a mixture of 80% by weight of the nickel hydroxide powder, 10% by weight of the cobalt monoxide powder and 30% by weight of the nickel powder (hereinafter simply referred to as F), to form another three kinds of slurry active materials.

These slurries were pasted to a nickel mesh current collector α of 80 μm wire diameter applied with plating of cobalt of 3 μm thickness and a nickel mesh current collector β not applied with cobalt plating respectively, which were dried and pressed into nickel electrodes each of 600 μm (0.6 mm) thickness.

These nickel electrodes were conbined with a pasted cadmium electrode as a counter electrode, to which KOH at d = 1.26 was injected to obtain solution type cells. After leaving them for 24 hours, tests were conducted by charging at 0.1 CA X 15 hr - discharging at 0.2 CA (final voltage: 1.00 V) at a temperature of 20°C repeatedly for 10 cycles.

Fig. 7 shows cell discharge characteristics in respective cases. In the figure, conditions for the nickel electrodes a ~ f are shown in the following Table 2.

Table 2

|  | a | b | c | d | e | f |
|---|---|---|---|---|---|---|
| Kind of current collector | β | α | β | α | β | α |
| Kind of active material | D | D | E | E | F | F |

Example 3

3% by weight of polytetrafluoroethylene as a binder was added to a mixture of 60% by weight of the nickel hydroxide powder, 10% by weight of the cobalt monoxide powder and 30% by weight of the carbon powder coated at the surface thereof with nickel, to form an active material sheet.

The active material sheet was press-bonded to a nickel mesh current collector at 80 um wire diameter applied with plating of cobalt 3 um thickness, which was dried and pressed into a nickel electrodes of 600 um (0.6mm) thickness.

The nickel electrode was combined with a pasted cadmium electrode as a counter electrode, to which KOH at d = 1.26 was injected to obtain a solution type cell. After leaving the cell for 24 hours, a test was conducted by charging at 0.1 CA x 15 hr - discharging at 0.2 CA (final voltage: 1.00) at a temperature of 20°C repeatedly for 10 cycles.

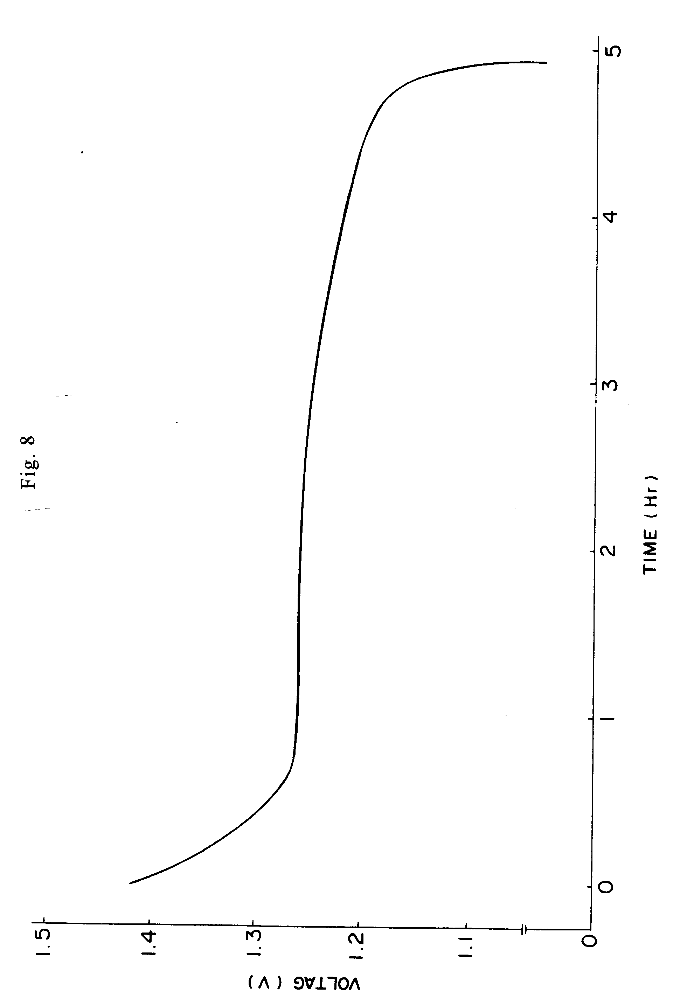

Fig. 8 shows cell discharge characteristics for Example 3.

The method of adding cobalt monoxide alone to nickel hydroxide in Example 1 and 2 was used in the sintered metal fibre current collector, in which substantially 100% utilization ratio could be obtained. However, only about 25% to 30% of the utilization ratio could be obtained for the mesh current collector. Further, in the method of adding a carbon or nickel powder alone to nickel hydroxide, only about 80% utilization ratio could be obtained although a great amount was added even in a case of existent pocket-type and button-type nickel electrodes in which a greater amount was added than in the present invention. Moreover, the utilization ratio could be obtained only for about 40 to 50% in the case of carbon and 18 to 20% in the case of nickel for the mesh current collector. In the present invention's method of adding cobalt monoxide and the conductive material in combination, about 100% of utilization ratio could be obtained in both of the examples. Thus this method is extremely effective for the mesh current collector.

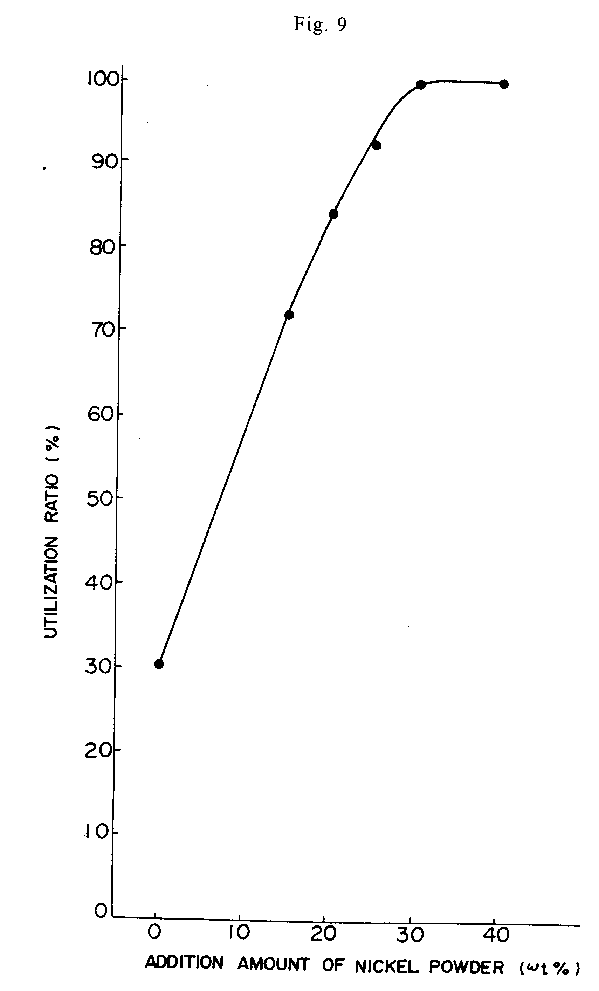

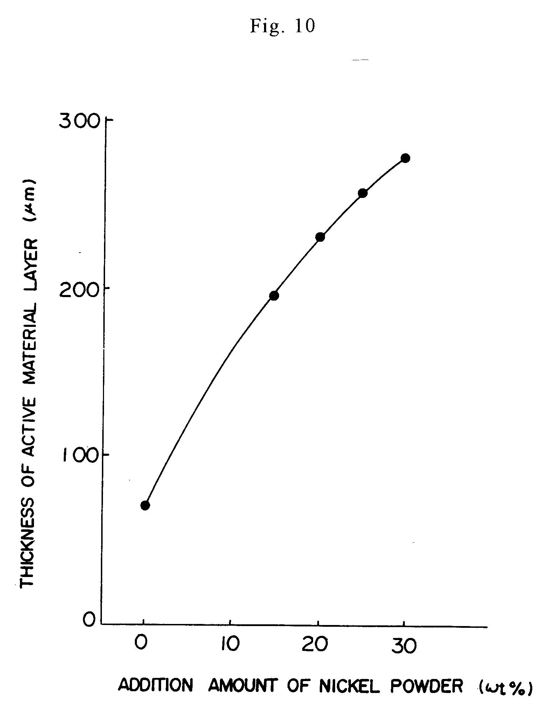

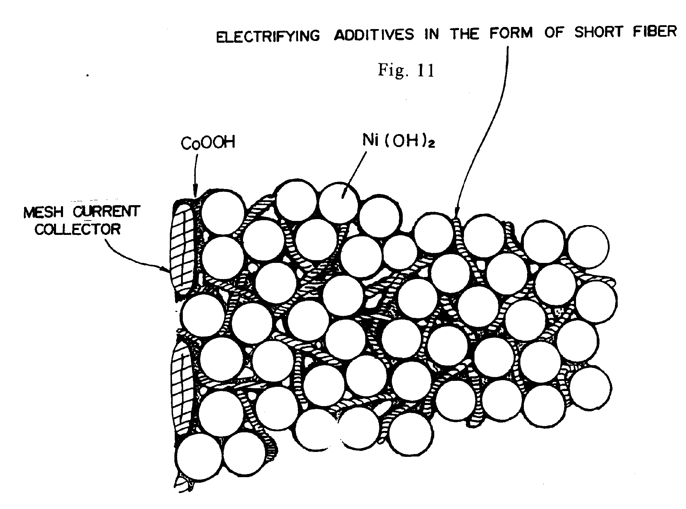

In the examples, since the total thickness of the electrode is 600 μm, the thickness of the active material layer from the current collector is about 300 μm. Since the effective distance of the conductive network of cobalt oxyhydroxide alone is considered to be about 70 to 80 μm, about 230 to 240 μm excepting the above-mentioned distance is compensated by the conductive material. In order to investigate a relationship between the effective distance compensated by the conductive material and the addition amount of the conductive material, the model experiment was made by changing the addition amount of the nickel powder variously. Fig. 9 shows the results. It can be seen from the figure that the utilization ratio is increased along with the increase in the addition amount of the nickel powder. Since the increase in the utilization ratio is considered to be attributable to the increase in the effective distance, it is possible to estimate, from this result, a relationship between the addition amount of the conductive material and the effective distance. Fig. 10 shows this relationship. It can be seen from the figure that an optimum addition amount is present depending on the thickness of the active material layer. For the shape and the size of the conductive material, an optimum condition is also considered to be present. For the shape, a short fibrous form is effective due to the synergistic effect and they function extremely effective, in particular, in the high rate discharging as compared with the powdered form. Accordingly, it is apparent that the boundary portion plays an important role for the utilization ratio. Fig. 11 shows a model, in the cross section, of the nickel electrode using the mesh current collector with the boundary portion comprising the cobalt oxyhydroxide layer and the active material layer having the conductive network assisted with the fibrous conductive material.

In the above-mentioned examples, cobalt monoxide is used as the divalent cobalt compound, but $\alpha$ - $Co(OH)_2$ and $\beta$ - $Co(OH)_2$ may also be used with similar effect.

Since the present invention can provide an inexpensive nickel electrode of high performance, great capacity and high productivity by coating the active material to a mesh current collector, it has a great industrial value.

## Claims

1.  A method of constructing an alkaline battery, comprising:
    (i) forming an electrode by applying an active material as a paste to a current collector formed of a network-like metal mesh of hollow nickel wire, drying and pressing the resulting structure to close the spaces inside the hollow wire, and
    (ii) assembling the said electrode into a battery together with electrolyte and allowing it to stand, dissolving a divalent cobalt compound in the electrolyte so that it forms a deposit on the electrode, and then applying a first charge to the battery to convert the cobalt hydroxide to cobalt oxyhydroxide.

2.  A method according to claim 1 for use in an alkaline battery, in which the active material applied to the current collector comprises nickel hydroxide powder, a divalent cobalt compound in powder form and a conductive additive material.

3.  A method according to claim 1 or 2 in which the divalent cobalt compound is at least one or more of CoO, $\alpha$-$Co(OH)_2$ and $\beta$-$Co(OH)_2$.

4.  A method according to claim 2 in which the conductive additive material is metal stable in an oxidation/reduction reaction, conductive material coated with a metal stable in an oxidation/reduction reaction, or carbon.

5.  A method according to claim 4 in which the conductive additive material is short and fibrous.

## Patentansprüche

1.  Verfahren zum Bau einer Alkalibatterie, welches das
    (i) Ausbilden einer Elektrode durch Aufbringen eines aktiven Materials als Paste auf einen Stromsammler, der aus einem netzartigen Metallgitter aus hohlem Nickeldraht ausgebildet ist, Trocknen und Pressen des sich ergebenden Aufbaus zum Schließen der Räume innerhalb des Hohldrahtes, und
    (ii) Einbauen der Elektrode in eine Batterie zusammen mit einem Elektrolyten und Stehenlassen derselben, Auflösen einer zweiwertigen Kobaltverbindung in dem Elektrolyten, so daß sie eine Abscheidung auf der Elektrode bildet, und nachfolgendes Aufbringen einer ersten Ladung auf die Batterie zur Umwandlung des Kobalthydroxids in Kobaltoxyhydroxid aufweist.

2.  Verfahren nach Anspruch 1 zur Verwendung in einer Alkalibatterie, bei welcher das auf den Stromsammler aufgebrachte aktive Material Nickelhydroxidpulver, eine zweiwertige Kobaltverbindung in Pulverform und ein leitfähiges Zusatzmaterial aufweist.

3.  Verfahren nach Anspruch 1 oder 2, bei welchem die zweiwertige Kobaltverbindung wenigstens eine oder mehr von CoO, $\alpha$-$Co(OH)_2$ and $\beta$-$Co(OH)_2$ ist.

4.  Verfahren nach Anspruch 2, bei welchem das leitfähige Zusatzmaterial in einer Oxidations/Reduktions-Reaktion stabiles Metall, mit einem in einer Oxidations/Reduktions-Reaktion stabilen Metall beschichtetes leitfähiges Material oder Kohlenstoff ist.

**5.** Verfahren nach Anspruch 4, bei welchem das leitfähige Zusatzmaterial kurz und faserig ist.

## Revendications

**1.** Procédé de fabrication d'une batterie alcaline, qui consiste :

(i) à former une électrode en appliquant un matériau actif sous forme de pâte à un collecteur de courant formé d'un treillis métallique en forme de réseau constitué d'un fil creux de nickel, à sécher et à comprimer la structure obtenue pour fermer les espaces situés à l'intérieur du fil creux, et

(ii) à assembler ladite électrode dans une batterie, avec l'électrolyte, et à la laisser au repos, à dissoudre un composé divalent du cobalt dans l'électrolyte de façon à ce qu'il forme un dépôt sur l'électrode, puis à appliquer une première charge à la batterie pour convertir l'hydroxyde de cobalt en oxyhydroxyde de cobalt.

**2.** Procédé selon la revendication 1, pour utilisation dans une batterie alcaline, dans lequel le matériau actif appliqué au collecteur de courant comprend une poudre d'hydroxyde de nickel, un composé divalent du cobalt sous forme de poudre et un matériau additif conducteur.

**3.** Procédé selon la revendication 1 ou 2, dans lequel le composé divalent du cobalt est au moins l'un ou plusieurs des composés CoO, a-Co(OH)$_2$ et b-Co(OH)$_2$.

**4.** Procédé selon la revendication 2, dans lequel le matériau additif conducteur est un métal stable dans le cadre d'une réaction d'oxydation/réduction, un matériau conducteur revêtu d'un métal stable dans le cadre d'une réaction d'oxydation/réduction, ou du carbone.

**5.** Procédé selon la revendication 4, dans lequel le matériau additif conducteur est court et fibreux.

Fig. 1

Fig. 2a

Fig. 2b

Fig. 3

Fig. 4

Fig. 5a    Fig. 5b    Fig. 5c

standing    charging

Fig. 6

Fig. 7

Fig. 8

EP 0 403 052 B1

Fig. 9

UTILIZATION RATIO (%) vs. ADDITION AMOUNT OF NICKEL POWDER (wt%)

Fig. 10

ELECTRIFYING ADDITIVES IN THE FORM OF SHORT FIBER

Fig. 11

CoOOH

Ni(OH)$_2$

MESH CURRENT COLLECTOR